# FASCICULE DE BREVET EUROPEEN

(11) **EP 3 137 756 B1**
(45) Date de publication et mention de la délivrance du brevet: **18.04.2018**
(21) Numéro de dépôt: 15725804.7
(22) Date de dépôt: 27.04.2015
(51) Int. Cl.: F02C 7/236, F02C 7/06

(54) **CIRCUIT D'ALIMENTATION EN FLUIDE DE GÉOMETRIES VARIABLES DE TURBOMACHINE SANS POMPE VOLUMÉTRIQUE**
FLÜSSIGKEITSVERSORGUNGSKREISLAUF MIT VARIABLEN GEOMETRIEN FÜR EINE TURBOMASCHINE OHNE VOLUMETRISCHE PUMPE
FLUID SUPPLY CIRCUIT FOR VARIABLE GEOMETRY DEVICES OF A TURBOMACHINE WITHOUT VOLUMETRIC PUMP

(30) Priorité: 28.04.2014 FR 1453820; 28.04.2014 FR 1453819
(43) Date de publication de la demande: 08.03.2017
(73) Titulaire: SAFRAN AIRCRAFT ENGINES, 75015 Paris (FR)
(72) Inventeur: CHALAUD, Sébastien, 77550 Moissy-Cramayel Cedex (FR)
(74) Mandataire: Brevalex
(86) Numéro de dépôt international: PCT/FR2015/051130
(87) Numéro de publication internationale: WO 2015/166177

(56) Documents cités:
- EP-A2- 2 088 302
- EP-A2- 2 093 400
- FR-A1- 2 882 095
- US-A1- 2010 126 136
- US-A1- 2012 204 532

## Description

### DOMAINE TECHNIQUE

L'invention se rapporte au domaine technique général des systèmes d'alimentation en fluide pour turbomachine, notamment en lubrifiant ou en carburant. Plus précisément, l'invention concerne un système d'alimentation en fluide à la fois d'une chambre de combustion de turbomachine et de géométries variables de turbomachine.

### ÉTAT DE LA TECHNIQUE ANTÉRIEURE

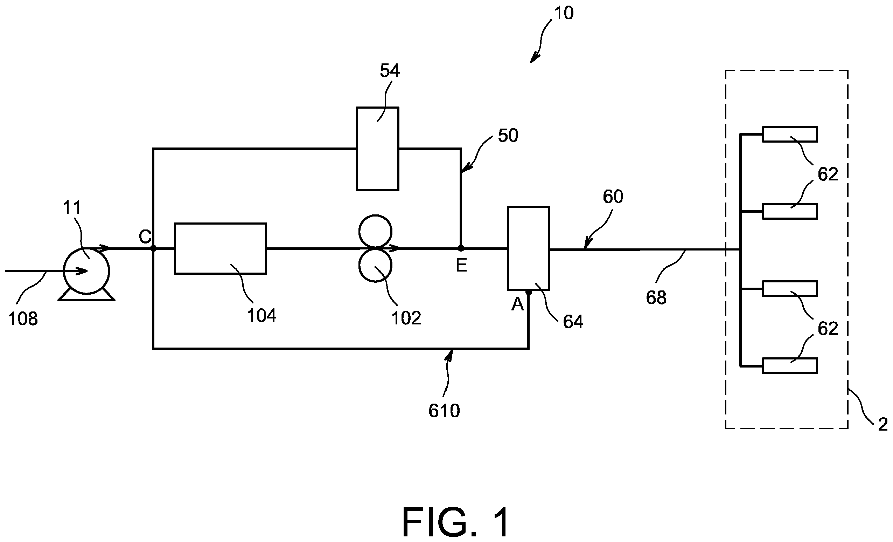

La figure 1 représente un système d'alimentation 10 en carburant pour turbomachine 1, selon une conception connue de l'état de la technique. Le système d'alimentation 1 comprend une pompe basse pression 11 configurée pour augmenter la pression du carburant s'écoulant vers une résistance hydraulique 104. La pompe basse pression 11 est notamment une pompe centrifuge. Le fluide en aval de la pompe basse pression 11 s'écoule ensuite en direction d'une pompe volumétrique haute pression 102.

La pompe volumétrique haute pression 102 est destinée à alimenter en fluide à débit constant à la fois un circuit d'alimentation 50 de géométries variables 54 et un circuit d'alimentation 60 en carburant d'une chambre de combustion 2.

Le circuit d'alimentation 50 de géométries variables 54 est conçu pour acheminer du carburant depuis un noeud d'entrée E de séparation du circuit d'alimentation 50 de géométries variables 54 et du circuit d'alimentation en carburant de la chambre de combustion 2, jusqu'à un noeud de sortie C situé entre la pompe basse pression 11 et la pompe volumétrique haute pression 102. Ce circuit d'alimentation 50 de géométries variables 54 est destiné à fournir aux géométries variables 54 une puissance hydraulique variable.

Le circuit d'alimentation 60 en carburant de la chambre de combustion 2 comprend un doseur de carburant 64 configuré pour réguler le débit de carburant à travers une conduite d'alimentation 68 et à destination des systèmes d'injection 62 de la chambre de combustion 2. Pour ce faire, le doseur de carburant 64 est destiné à laisser s'écouler un excès de carburant à travers une boucle de recirculation de fluide 610 depuis un premier noeud A situé en aval du noeud d'entrée E jusqu'au noeud de sortie C.

Cependant, cet excès de carburant circulant dans la boucle de recirculation de fluide 610 génère une dissipation d'énergie thermique importante dans le système d'alimentation 10. Plus généralement, la puissance thermique dissipée dans le système d'alimentation 10 de la figure 1 est élevée. Il en découle une diminution des performances globales d'une turbomachine 1 comprenant le système d'alimentation 10.

US 2010/126136 divulgue également un système d'alimentation en carburant connu de l'état de la technique.

### EXPOSÉ DE L'INVENTION

L'invention vise à résoudre au moins partiellement les problèmes rencontrés dans les solutions de l'art antérieur.

A cet égard, l'invention a pour objet un système d'alimentation de turbomachine en fluide, le système d'alimentation comprenant un circuit amont et un circuit aval raccordé au circuit amont,
le circuit amont comprenant un bloc de pompage basse pression, destiné à augmenter la pression du fluide s'écoulant en direction du circuit aval et qui comprend une première pompe centrifuge,
le circuit aval se subdivisant à un noeud d'entrée en un circuit d'alimentation d'un système d'injection pour chambre de combustion et en un autre circuit d'alimentation configuré pour acheminer du fluide vers des géométries variables, le circuit d'alimentation du système d'injection comprenant une pompe volumétrique haute pression.

Selon l'invention, le bloc de pompage basse pression est dépourvu de pompe volumétrique et comprend au moins une autre pompe centrifuge en série avec la première pompe centrifuge,
le noeud d'entrée est situé entre le bloc de pompage basse pression et la pompe volumétrique haute pression, et
le circuit d'alimentation de géométries variables est raccordé au circuit amont à un noeud de sortie situé entre deux pompes du bloc de pompage basse pression.

L'augmentation de pression du fluide dans le circuit amont sert à la fois à alimenter le circuit d'alimentation de géométries variables et le circuit d'alimentation du système d'injection, tandis que les besoins en débit de fluide du système d'injection et en pression hydraulique des géométries variables sont traités de manière distincte par une architecture de régulation de l'alimentation en fluide. En particulier, les géométries variables ne sont pas alimentées en fluide par la pompe volumétrique haute pression. La puissance thermique totale dissipée dans le système d'alimentation est alors réduite.

La pluralité de pompes centrifuges est destinée à augmenter davantage la pression du fluide qui les traverse, tout en limitant l'encombrement et la dissipation d'énergie thermique du bloc de pompage basse pression. L'augmentation de la puissance fournie par le bloc de pompage basse pression est notamment moins importante que la baisse de la puissance fournie par la pompe volumétrique qui en résulte.

Le fluide dans le système d'alimentation est notamment du lubrifiant, typiquement de l'huile, ou du carburant.

L'invention peut comporter de façon facultative une ou plusieurs des caractéristiques suivantes combinées entre elles ou non.

Selon une forme de réalisation avantageuse, le noeud de sortie est situé entre la première pompe centrifuge et une deuxième pompe centrifuge du bloc de pompage basse pression.

De préférence, le bloc de pompage basse pression est constitué d'une pluralité de pompes centrifuges en série. Le bloc de pompage basse pression comprend préférablement de trois, quatre ou cinq pompes centrifuges.

Selon une particularité de réalisation, la pompe haute pression est une pompe volumétrique à engrenages configurée pour être entrainée mécaniquement par une boite de transmission de turbomachine.

La boite de transmission transmet de préférence un couple transmis par un arbre haute pression de turbomachine, pour entraîner mécaniquement la pompe volumétrique haute pression. La pompe volumétrique haute pression est notamment située à l'intérieur d'une boite de relais d'accessoires, également connue sous le nom d' « Accesorry Gear Box » ou « AGB ». La pompe volumétrique haute pression relève alors d'une technologie robuste et éprouvée, qui nécessite des efforts de développement et de certifications limités.

Lorsque la pompe haute pression est une pompe volumétrique à engrenages, le circuit d'alimentation du système d'injection comprend de préférence un doseur de fluide et un système d'injection, le doseur de fluide étant configuré pour réguler le débit en direction du système d'injection et/ou en direction d'une boucle de recirculation de fluide configurée pour acheminer du fluide en amont de la pompe haute pression.

La boucle de recirculation de fluide est notamment configurée pour acheminer du fluide en provenance du doseur jusqu'à un noeud d'évacuation situé entre le bloc de pompage basse pression et la pompe haute pression. Le noeud d'évacuation raccorde par exemple le circuit d'alimentation du système d'injection au circuit amont.

Le noeud d'évacuation se trouve aussi proche que possible de l'entrée de la pompe volumétrique haute pression, afin de limiter la puissance thermique dissipée dans la boucle de recirculation de fluide. Néanmoins, le noeud d'évacuation se trouve généralement en amont d'une résistance hydraulique comprenant par exemple un filtre et/ou un débitmètre.

Le système d'alimentation comprend de préférence une résistance hydraulique entre le bloc de pompage basse pression et la pompe haute pression, la résistance hydraulique comprenant au moins l'un des éléments suivants : un échangeur, un filtre, une vanne de coupure ou un débitmètre.

Selon une autre particularité de réalisation, la pompe volumétrique haute pression est une pompe électrique commandée par un système électronique de régulation de la turbomachine.

Par ailleurs, l'utilisation d'une pompe volumétrique électrique permet de limiter la masse, l'encombrement et la puissance dissipée dans le système d'alimentation. Plus précisément, la puissance relativement faible fournie par la pompe volumétrique électrique permet de la commander sans ajout à la turbomachine d'électronique de puissance massive. En outre, la boucle de recirculation et le doseur peuvent être supprimés du système d'alimentation. Enfin, il est possible d'ajuster le débit délivré par la pompe volumique électrique, de sorte à limiter les pertes thermiques associées à la circulation d'un excès de fluide dans le système d'alimentation.

La pompe volumétrique électrique est de préférence commandée par un système électronique de régulation à pleine autorité via un module électronique de régulation. Le système électronique de régulation à pleine autorité, le module électronique de régulation et la pompe volumétrique électrique assurent alors la régulation du débit de fluide s'écoulant en direction de la chambre de combustion.

Dans cette configuration, le circuit d'alimentation de système d'injection est de préférence dépourvu de doseur de fluide configuré pour réguler le débit en direction du système d'injection.

Selon une autre forme de réalisation avantageuse, le circuit d'alimentation de géométries variables est dépourvu de pompe volumétrique.

Avantageusement, le circuit amont est dépourvu de pompe volumétrique.

Selon une autre particularité de réalisation, le circuit d'alimentation de géométries variables comprend au moins un actionneur hydraulique de géométries variables.

Avantageusement, le circuit d'alimentation de géométries variables comprend un ensemble de pompage complémentaire comprenant une ou plusieurs pompes centrifuges. De préférence, l'ensemble de pompage complémentaire est constitué d'une ou plusieurs pompes centrifuges.

En variante, le circuit d'alimentation de géométries variables est dépourvu de pompe. Dans ce cas, la pression du fluide alimentant chaque géométrie variable est générée en dernier lieu par le bloc de pompage basse pression.

L'invention se rapporte aussi à une turbomachine comprenant un système d'alimentation en fluide tel que défini ci-dessus.

L'invention a également trait à une turbomachine comprenant un réducteur différentiel configuré pour entraîner en rotation au moins une hélice et destiné à être alimenté en lubrifiant par le système d'alimentation tel que défini ci-dessus. Dans ce cas, la turbomachine est par exemple une turbomachine à ensemble d'hélices contrarotatives non carénées, également connue sous le nom d'« Open Rotor ».

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une vue schématique partielle d'un système d'alimentation en carburant de turbomachine d'aéronef, selon une conception connue de l'état de la technique ;
- la figure 2 est une représentation schématique partielle d'un système d'alimentation en fluide de turbomachine, selon un premier mode de réalisation de l'invention ;
- la figure 3 est une représentation schématique partielle d'un système d'alimentation en fluide de turbomachine, selon un deuxième mode de réalisation de l'invention,
- la figure 4 est une représentation schématique partielle d'un système d'alimentation en fluide pour turbomachine, selon un troisième mode de réalisation de l'invention.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

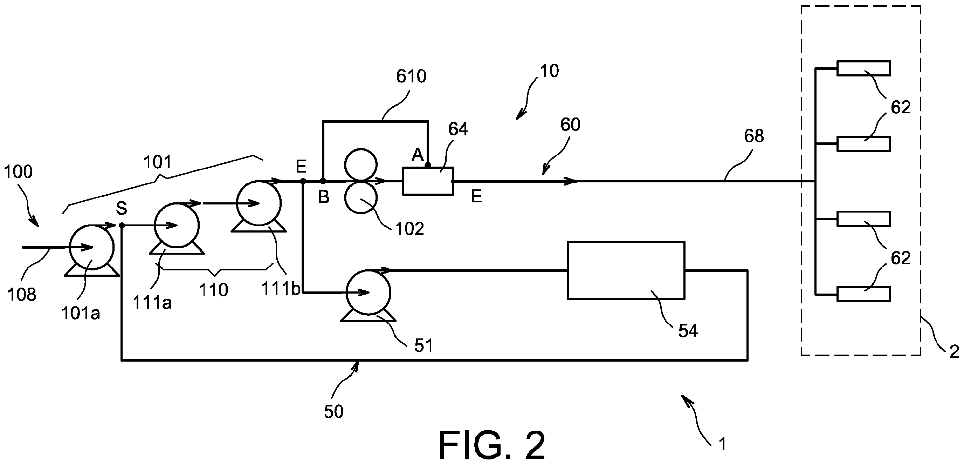

La figure 2 représente un système d'alimentation 10 de turbomachine 1 d'aéronef en fluide. Dans le mode de réalisation décrit, le fluide est du carburant. Néanmoins, lorsque la turbomachine 1 comprend un réducteur différentiel (non représenté) configuré pour entrainer en rotation au moins une hélice, le fluide peut également être du lubrifiant, typiquement de l'huile.

La turbomachine 1 comprend le système d'alimentation 10, une ou plusieurs géométries variables 54 et une chambre de combustion 2. Ces géométries variables 54 sont des équipements de turbomachine 1 qui nécessitent de prélever une puissance hydraulique pour fonctionner. Les géométries variables 54 peuvent être de natures diverses, par exemple un vérin, une servovalve, une vanne de décharge ajustable de compresseur, une vanne de décharge transitoire de compresseur, et/ou une vanne de réglage de débit d'air pour un système de réglage de jeu au sommet d'aubes de rotor pour turbine basse pression ou turbine haute pression.

La chambre de combustion 2 est alimentée en carburant par une pluralité d'injecteurs de carburant coopérant avec les systèmes d'injection 62 de carburant correspondant.

Le système d'alimentation 10 comprend un circuit amont 100 et un circuit aval 50, 60. Le circuit aval 50, 60 est raccordé au circuit amont 100 et situé en aval du circuit amont 100. Les termes « amont » et « aval » sont définis en référence à la direction générale d'écoulement du carburant dans le système d'alimentation 10 en direction de la chambre de combustion 2.

Le circuit amont 100 comprend un bloc de pompage basse pression 101 augmentant la pression de carburant s'écoulant en direction du circuit aval 50, 60. Le bloc de pompage basse pression 101 augmente la pression du carburant, de manière à limiter/empêcher les risques de cavitation à l'intérieur d'une pompe haute pression 102 qui délivre un débit de carburant constant en fonction du régime de rotation moteur.

Le circuit amont 100 peut comprendre une résistance hydraulique 104, telle que celle représentée à la figure 1, entre le bloc de pompage basse pression 101 et le circuit aval 50, 60 ou bien entre deux étages du bloc de pompage basse pression 101. Le terme « résistance hydraulique » sert à définir dans ce document, par analogie avec le domaine de l'électricité, la grandeur issue du rapport entre la différence de pression de fluide entre l'entrée et la sortie d'un élément du système d'alimentation sur le débit de fluide traversant l'élément. Par métonymie et toujours par analogie avec le domaine de l'électricité, le terme « résistance hydraulique » sert également à désigner un élément du système d'alimentation caractérisé par cette grandeur. La résistance hydraulique 104 du circuit amont 100 comprend par exemple un échangeur, un filtre à carburant, une vanne de coupure et /ou un débitmètre.

Le circuit aval 50, 60 comprend un circuit d'alimentation 60 des systèmes d'injection 62 pour chambre de combustion 2, et un circuit d'alimentation 50 de géométries variables. Le circuit d'alimentation 50 de géométries variables et le circuit d'alimentation 60 des systèmes d'injection 62 se séparent au niveau d'un noeud d'entrée E situé en aval du bloc de pompage basse pression 101.

Le circuit d'alimentation 50 de géométries variables est configuré pour acheminer du fluide transitant par les géométries variables 54, depuis le noeud d'entrée E jusqu'à un noeud de sortie S raccordant le circuit d'alimentation 50 de géométries variables au circuit amont 100.

Les systèmes d'alimentation 10 représentés aux figures 2 à 4 se distinguent principalement de celui de la figure 1 en ce que le circuit amont 100 est dépourvu de pompe volumétrique haute pression, en ce que le bloc de pompage basse pression 101 est constitué d'une pluralité de pompe centrifuges 110a, 111a, 111b, et en ce que le circuit aval 50, 60 comprend une pompe volumétrique haute pression 102.

Le bloc de pompage basse pression 101, visible aux figures 2 à 4, augmente davantage la pression du fluide en direction de la pompe haute pression 102 par rapport à la pompe basse centrifuge basse pression 11 de la figure 1. La pompe volumétrique haute pression 102 de la figure 2 fournit alors une augmentation de pression de fluide d'autant plus faible. Il en résulte une diminution globale des pertes thermiques du système d'alimentation 10.

Le déplacement de la pompe volumétrique haute pression 102 du circuit amont 100 au circuit 60 d'alimentation des systèmes d'injection 62 permet de diminuer le débit de carburant fourni par la pompe volumétrique 102. Les pertes thermiques globales du système d'alimentation 10 sont encore réduites. Le circuit d'alimentation des géométries variables 50 est dépourvu de pompe volumétrique.

Le bloc de pompage basse pression 101 des figures 2 à 4 comprend une pluralité de pompes centrifuges 101a, 111a, 111b. A ce titre, il convient de noter qu'il n'aurait pas été pleinement satisfaisant de seulement remplacer la pompe basse pression 11 de la figure 1 par une pompe basse pression 11 de plus grande capacité. En effet, la différence de pression aux bornes d'une pompe centrifuge est proportionnelle au carré du rayon de la pompe. Surtout, le rendement énergétique d'une pompe centrifuge est proportionnel au cube du rayon de cette pompe. Remplacer la pompe basse pression 11 de la figure 1 par une pompe basse pression centrifuge, configurée pour augmenter davantage la pression du fluide qui la traverse, n'aurait donc pas produit des avantages aussi significatifs en termes de bilan thermique global du système d'alimentation 10.

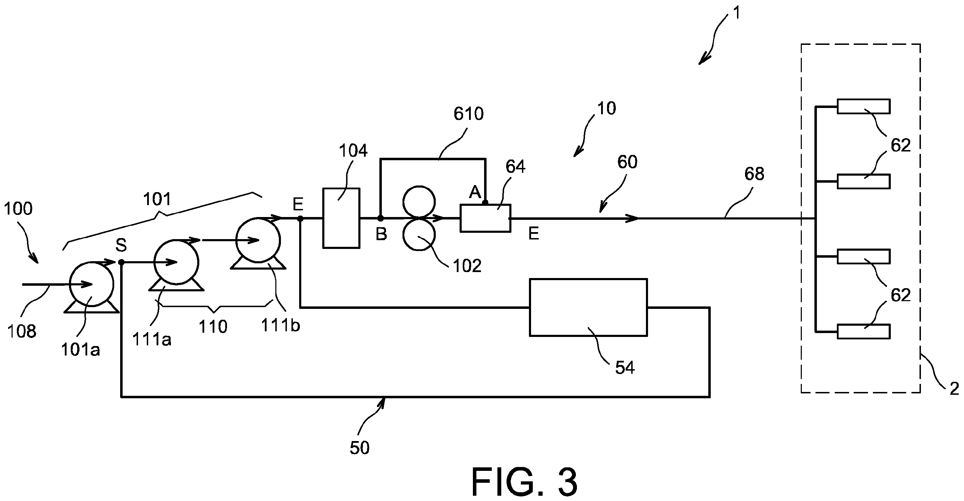

Le noeud de sortie S du système d'alimentation 10 des figures 2 à 4 est situé entre deux pompes 101a, 111a du bloc de pompage basse pression 101, de sorte à conserver une différence de pression entre l'aval de l'ensemble de pompage complémentaire 51 et le noeud de sortie S suffisante et tout en limitant la dissipation d'énergie thermique dans le système d'alimentation 10. Le système d'alimentation 10 des figures 2 et 3 est notamment configuré pour que la différence de pression entre l'aval de l'ensemble de pompage complémentaire 51 et le noeud de sortie S du système d'alimentation de ces figures soit sensiblement identique à celle de la figure 1, lors du fonctionnement du système d'alimentation 10.

Plus précisément et en référence au mode de réalisation des figures 2 à 4, le bloc de pompage basse pression 101 est constitué de trois pompes centrifuges 101a, 111a, 111b montées en série. Le noeud de sortie S se trouve entre un bloc de pompage amont 101a comprenant une pompe centrifuge et un bloc de pompage aval 110 comprenant deux pompes centrifuges 111a, 111b.

De manière générale, le bloc de pompage amont 101a peut comprendre plusieurs pompes centrifuges et le nombre de pompes centrifuges du bloc de pompage aval 110 peut varier, en fonction des besoins en puissance hydraulique et en débit de fluide de la turbomachine 1. De même, les pompes du bloc de pompage basse pression 101 ne sont pas nécessairement identiques.

Par ailleurs, l'augmentation de pression fournie par le bloc de pompage basse pression 101 des figures 2 à 4 par rapport au système d'alimentation 10 de la figure 1 est d'autant plus avantageuse que les besoins en pression hydraulique du circuit 50 d'alimentation des géométries variables de ces systèmes d'alimentation 10 sont sensiblement identiques à ceux des géométries variables du système d'alimentation de la figure 1.

Dans les modes de réalisation des figures 2 et 3, la pompe haute pression 102 est une pompe volumétrique à engrenages configurée pour être entrainée mécaniquement par une boite de transmission de turbomachine 1. Le noeud d'évacuation B est situé entre le bloc de pompage basse pression 101 et la pompe volumétrique haute pression 102.

La pompe volumétrique haute pression 102 délivre un débit de carburant constant en fonction du régime de rotation moteur. Le débit de carburant en sortie de la pompe volumétrique haute pression 102 est, de manière connue, supérieur au débit nécessaire pour approvisionner les systèmes d'injection 62, quelle que soit la phase concernée du vol de la turbomachine 1. En particulier, le débit constant fourni par la pompe volumétrique haute pression 102 est déterminé en fonction des débits nécessaire pour les régimes de fonctionnement de la turbomachine 1 les plus contraignants, c'est-à-dire les débits pour les bas régimes par exemple. Par conséquent, il existe un débit de fluide circulant dans la boucle de recirculation 610, ce qui génère des pertes thermiques. Cette boucle de recirculation 610 est située entre un premier noeud A en aval du noeud d'entrée E et un noeud d'évacuation B situé en aval du bloc de pompage basse pression 101.

Le circuit d'alimentation 60 des systèmes d'injection comprend une vanne de décharge et un doseur de carburant qui sont représentés par le bloc 64 et qui régulent le débit en direction du système d'injection 62. La vanne de décharge et le doseur de carburant 64 sont conçus pour rediriger le carburant en excès dans le circuit d'alimentation 60 des systèmes d'injection 62 vers le circuit amont 100 à travers la boucle de recirculation 610 de carburant.

Le circuit d'alimentation 50 de géométries variables de la figure 2 se distingue de celui de la figure 3 en ce qu'il comprend un ensemble de pompage complémentaire 51. L'ensemble de pompage complémentaire 51 permet de supprimer toute baisse de pression issue de la suppression de la pompe volumétrique 102 dans le circuit amont 100, et qui ne serait pas entièrement compensée par la pluralité de pompes centrifuges 101a, 111a et 111b du bloc de pompage basse pression 101.

L'ensemble de pompage complémentaire 51 permet de répondre à un besoin en débit ponctuel important des géométries variables 54, par exemple lors d'un déplacement de vérin d'actionneur hydraulique.

L'ensemble de pompage complémentaire 51 comprend une ou plusieurs pompes centrifuges, ou bien d'autres types de pompes autres qu'une pompe volumétrique. Dans le mode de réalisation de la figure 2, l'ensemble de pompage complémentaire 101 est constitué d'une pompe centrifuge.

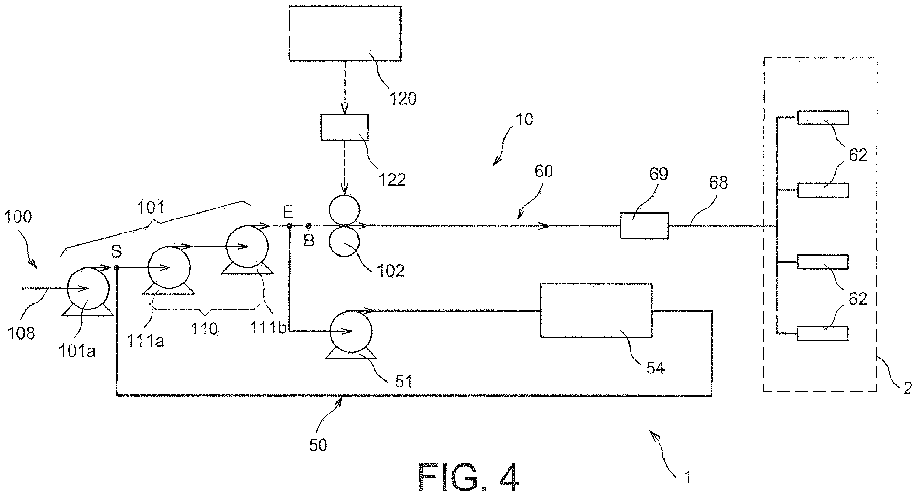

En référence spécifiquement à la figure 4, le circuit d'alimentation 60 des systèmes d'injection comprend une résistance hydraulique 69, telle qu'un filtre à carburant, et une conduite d'alimentation 68 des systèmes d'injection entre la résistance hydraulique 69 et les systèmes d'injection 62.

La pompe volumétrique 102 est électrique, ce qui permet de supprimer le doseur de carburant 64 régulant le débit en direction de la chambre de combustion 2. La boucle de recirculation de carburant 610 disparaît également. Il en découle un gain de masse du système d'alimentation 10, ainsi qu'une suppression des pertes thermiques générées par la recirculation du carburant dans la boucle de recirculation 610.

La diminution de la puissance fournie par la pompe volumétrique haute pression 102 permet de commander la pompe volumétrique électrique 102 sans avoir recours à de l'électronique de puissance massive. Le recours à une pompe volumétrique électrique haute pression 102, plutôt qu'à une pompe volumétrique plus classique à engrenages entraînée en rotation par une boite de transmission de turbomachine, apporte donc des avantages en termes de masse, d'encombrement et de puissance thermique dissipée dans le système d'alimentation 10.

La pompe volumétrique électrique 102 est commandée par le système électronique de régulation à pleine autorité 120 de la turbomachine, également connu sous le nom de « FADEC » ou « Full Authority Digital Engine Control », via un module électronique de régulation 122. De manière classique, le système électronique de régulation 120 comprend un calculateur moteur à deux voies symétriques, redondantes et à pleine autorité. Ce calculateur moteur est destiné à prendre en compte de nombreux paramètres pour commander le débit délivré par la pompe volumétrique haute pression 102, comme par exemple : une commande d'un pilote de l'aéronef, la vitesse de rotation du corps haute pression de turbomachine 1 et une mesure de débit en direction des systèmes d'injections 62 mesuré par un débitmètre.

Bien entendu, diverses modifications peuvent être apportées par l'homme du métier à l'invention qui vient d'être décrite sans sortir du cadre de l'exposé de l'invention.

## Revendications

1. Système d'alimentation (10) de turbomachine en fluide, le système d'alimentation (10) comprenant un circuit amont (100) et un circuit aval (50, 60) raccordé au circuit amont (100),
le circuit amont (100) comprenant un bloc de pompage basse pression (101), destiné à augmenter la pression du fluide s'écoulant en direction du circuit aval (50, 60) et qui comprend une première pompe centrifuge (101a),
le circuit aval (50, 60) se subdivisant à un noeud d'entrée (E) en un circuit d'alimentation (60) d'un système d'injection pour chambre de combustion (2) et en un autre circuit d'alimentation (50) configuré pour acheminer du fluide vers des géométries variables (54), le circuit d'alimentation (60) du système d'injection comprenant une pompe volumétrique haute pression (102),
**caractérisé en ce que** le bloc de pompage basse pression (101) est dépourvu de pompe volumétrique et comprend au moins une autre pompe centrifuge (111a, 111b) en série avec la première pompe centrifuge (101a),
**en ce que** le noeud d'entrée (E) est situé entre le bloc de pompage basse pression (101) et la pompe volumétrique haute pression (102), et
**en ce que** le circuit d'alimentation (50) de géométries variables est raccordé au circuit amont (100) à un noeud de sortie (S) situé entre deux pompes (101a, 111a) du bloc de pompage basse pression (101).

2. Système d'alimentation (10) selon la revendication précédente, dans lequel ledit noeud de sortie (S) est situé entre la première pompe centrifuge (101a) et une deuxième pompe centrifuge (111a) du bloc de pompage basse pression (101).

3. Système d'alimentation (10) selon l'une quelconque des revendications précédentes, dans lequel le bloc de pompage basse pression (101) est constitué de trois, quatre ou cinq pompes centrifuges (101a, 111a, 111b) en série.

4. Système d'alimentation (10) selon l'une quelconque des revendications 1 à 3, dans lequel la pompe volumétrique haute pression (102) est une pompe à engrenages configurée pour être entraînée mécaniquement par une boite de transmission de turbomachine (1).

5. Système d'alimentation (10) selon la revendication précédente, dans lequel le circuit d'alimentation (60) du système d'injection comprend un doseur de fluide (64) et un système d'injection (62), le doseur de fluide (64) étant configuré pour réguler le débit en direction du système d'injection (62) et/ou en direction d'une boucle de recirculation (610) de fluide configurée pour acheminer du fluide en amont de la pompe haute pression (102).

6. Système d'alimentation (10) selon l'une quelconque des revendications 1 à 3, dans lequel la pompe volumétrique haute pression (102) est une pompe électrique commandée par un système électronique de régulation de la turbomachine.

7. Système d'alimentation (10) selon la revendication précédente, dans lequel la pompe volumétrique haute pression (102) électrique est commandée par un système électronique de régulation à pleine autorité (120) via un module électronique de régulation (122).

8. Système d'alimentation (10) selon l'une quelconques des revendications précédentes, dans lequel le circuit d'alimentation (50) de géométries variables est dépourvu de pompe volumétrique.

9. Système d'alimentation (10) selon l'une quelconques des revendications précédentes, dans lequel le circuit amont (100) est dépourvu de pompe volumétrique.

10. Système d'alimentation (10) selon l'une quelconques des revendications précédentes, dans lequel le circuit d'alimentation (50) de géométries variables comprend au moins un actionneur hydraulique (54) de géométries variables.

11. Système d'alimentation (10) selon l'une quelconques des revendications précédentes, dans lequel le circuit d'alimentation (50) de géométries variables comprend un ensemble de pompage complémentaire(51) comprenant au moins une pompe centrifuge.

12. Turbomachine (1) comprenant un système d'alimentation (10) en fluide, selon l'une quelconque des revendications précédentes.

13. Turbomachine (1) selon la revendication précédente, comprenant un réducteur différentiel configuré pour entraîner en rotation au moins une hélice et destiné à être alimenté en lubrifiant par le système d'alimentation (10) selon l'une quelconques des revendications 1 à 11.

## Patentansprüche

1. System zur Versorgung (10) eines Turbotriebwerks mit Flüssigkeit, wobei das Versorgungssystem (10) einen in Strömungsrichtung vorderen Kreislauf (100) und einen mit dem in Strömungsrichtung vorderen Kreislauf (100) verbundenen in Strömungsrichtung hinteren Kreislauf (50, 60) umfasst,
wobei der in Strömungsrichtung vordere Kreislauf (100) einen Niederdruck-Pumpblock (101) enthält, der dazu vorgesehen ist, den Druck der Flüssigkeit, die in Richtung des in Strömungsrichtung hinteren Kreislaufs (50, 60) fließt, zu erhöhen, und der eine erste Kreiselpumpe (101a) umfasst,
wobei sich der in Strömungsrichtung hintere Kreislauf (50, 60) an einem Einlass-Knotenpunkt (E) in einen Versorgungskreis (60) eines Einspritzsystems für eine Brennkammer (2) und einen weiteren Versorgungskreis (50), der dazu konzipiert ist, Flüssigkeit zu variablen Geometrien (54) zu befördern, unterteilt, wobei der Versorgungskreis (60) des Einspritzsystems eine Hochdruck-Zumesspumpe (102) enthält,
**dadurch gekennzeichnet,**
**dass** der Niederdruck-Pumpblock (101) keine Zumesspumpe enthält und mindestens eine weitere Kreiselpumpe (111a, 111b) aufweist, die mit der ersten Kreiselpumpe (101a) hintereinander eingebaut ist,
**dass** der Einlass-Knotenpunkt (E) sich zwischen dem Niederdruck-Pumpblock (101) und der Hochdruck-Zumesspumpe (102) befindet, und
**dass** der Versorgungskreis (50) für variable Geometrien an einem Auslass-Knotenpunkt (S), der sich zwischen zwei Pumpen (101a, 111a) des Niederdruck-Pumpblocks (101) befindet, mit dem in Strömungsrichtung vorderen Kreislauf (100) verbunden ist.

2. Versorgungssystem (10) nach dem vorherigen Anspruch, bei dem sich der genannte Auslass-Knotenpunkt (S) zwischen der ersten Kreiselpumpe (101a) und einer zweiten Kreiselpumpe (111a) des Niederdruck-Pumpblocks (101) befindet.

3. Versorgungssystem (10) nach einem der vorherigen Ansprüche, bei dem der Niederdruck-Pumpblock (101) von drei, vier oder fünf hintereinander sitzenden Kreiselpumpen (101a, 111a, 111b) gebildet wird.

4. Versorgungssystem (10) nach einem der Ansprüche 1 bis 3, bei dem die Hochdruck-Zumesspumpe (102) eine Zahnradpumpe ist, die dazu konzipiert ist, mechanisch durch ein Getriebe eines Turbotriebwerks (1) angetrieben zu werden.

5. Versorgungssystem (10) nach dem vorherigen Anspruch, bei dem der Versorgungskreis (60) des Einspritzsystems einen Flüssigkeits-Dosierer (64) und ein Einspritzsystem (62) umfasst, wobei der Flüssigkeits-Dosierer (64) konzipiert ist, um die Durchflussmenge in Richtung des Einspritzsystems (62) und/oder in Richtung eines Umwälzkreises (610) der Flüssigkeit zu regulieren, der dazu konzipiert ist, Flüssigkeit in Strömungsrichtung vor die Hochdruckpumpe (102) zu befördern.

6. Versorgungssystem (10) nach einem der Ansprüche 1 bis 3, bei dem die Hochdruck-Zumesspumpe (102) eine elektrische Pumpe ist, die von einem elektronischen Regelsystem des Turbotriebwerks gesteuert wird.

7. Versorgungssystem (10) nach dem vorherigen Anspruch, bei dem die elektrische Hochdruck-Zumesspumpe (102) von einem elektronischen Regelsystem mit gesamter Kontrolle (120) gesteuert wird, und zwar über ein elektronisches Regelmodul (122).

8. Versorgungssystem (10) nach einem der vorherigen Ansprüche, bei dem der Versorgungskreis (50) für variable Geometrien keine Zumesspumpe aufweist.

9. Versorgungssystem (10) nach einem der vorherigen Ansprüche, bei dem der in Strömungsrichtung vordere Kreislauf (100) keine Zumesspumpe aufweist.

10. Versorgungssystem (10) nach einem der vorherigen Ansprüche, bei dem der Versorgungskreis (50) für variable Geometrien mindestens ein hydraulisches Stellorgan (54) für variable Geometrien aufweist.

11. Versorgungssystem (10) nach einem der vorherigen Ansprüche, bei dem der Versorgungskreis (50) für variable Geometrien eine ergänzende Pumpgruppe (51) umfasst, die mindestens eine Kreiselpumpe enthält.

12. Turbotriebwerk (1) mit einem Flüssigkeits-Versorgungssystem (10) nach einem der vorherigen Ansprüche.

13. Turbotriebwerk (1) nach dem vorherigen Anspruch, das ein Differentialgetriebe aufweist, das dazu konzipiert ist, mindestens eine Schraube in Drehbewegung zu versetzen, und dazu vorgesehen ist, mittels des Versorgungssystems (10) nach einem der Ansprüche 1 bis 11 mit Schmiermittel versorgt zu werden.

## Claims

1. System for supplying (10) a turbomachine with fluid, with the system for supplying (10) comprising an upstream circuit (100) and a downstream circuit (50, 60) connected to the upstream circuit (100),
the upstream circuit (100) comprising a low-pressure pumping unit (101), intended to increase the pressure of the fluid flowing toward a downstream circuit (50, 60) and which comprises a first centrifugal pump (101a),
the downstream circuit (50, 60) divides at an inlet node (E) into a supply circuit (60) of an injection system for a combustion chamber (2) and into another supply circuit (50) configured to convey fluid to variable geometries (54), wherein the supply circuit (60) of the injection system comprises a high-pressure volumetric pump (102),
**characterised in that** the low-pressure pumping unit (101) is devoid of a volumetric pump and comprises at least one other centrifugal pump (111a, 111b) in series with the first centrifugal pump (101a),
**in that** the inlet node (E) is situated between the low-pressure pumping unit (101) and the high-pressure volumetric pump (102), and
**in that** the variable geometries supply circuit (50) is connected to the upstream circuit (100) at an outlet node (S) situated between two pumps (101a, 111a) of the low-pressure pumping unit (101).

2. System for supplying (10) as claimed in the preceding claim, wherein said outlet node (S) is situated between the first centrifugal pump (101a) and a second centrifugal pump (111a) of the low-pressure pumping unit (101).

3. System for supplying (10) as claimed in any preceding claim, wherein the low-pressure pumping unit (101) is constituted of three, four or five centrifugal pumps (101a, 111a, 111b) in series.

4. System for supplying (10) according to any of claims 1 to 3, wherein the high-pressure volumetric pump (102) is a gear pump configured to be mechanically driven by a turbomachine gearbox (1).

5. System for supplying (10) as claimed in the preceding claim, wherein the supply circuit (60) of the injection system comprises a fluid metering device (64) and an injection system (62), wherein the fluid metering device (64) is configured to adjust the flow in the direction of the injection system (62) and/or in the direction of a fluid recirculation loop (610) configured to convey the fluid upstream of the high-pressure pump (102).

6. System for supplying (10) according to any of claims 1 to 3, wherein the high-pressure volumetric pump (102) is an electric pump commanded by an electronic system for regulating the turbomachine.

7. System for supplying (10) as claimed in the preceding claim, wherein the high-pressure electric volumetric pump (102) is commanded by a full-authority electronic control module (120) via an electronic control module (122).

8. System for supplying (10) according to one of the preceding claims, wherein the variable geometries supply circuit (50) is devoid of a volumetric pump.

9. System for supplying (10) according to one of the preceding claims, wherein the upstream circuit (100) is devoid of a volumetric pump.

10. System for supplying (10) according to one of the preceding claims, wherein the variable geometries supply circuit (50) comprises at least one hydraulic actuator (54) of variable geometries.

11. System for supplying (10) according to one of the preceding claims, wherein the variable geometries supply circuit (50) comprises a set of complementary pumping (51) comprising at least one centrifugal pump.

12. Turbomachine (1) comprising a system for supplying (10) with fluid, as claimed in any preceding claim.

13. Turbomachine (1) as claimed in the preceding claim, comprising a differential gearbox configured to drive in rotation at least one propeller and intended to be supplied with lubricant by the system for supplying (10) according to any one of claims 1 to 11.
